# EUROPÄISCHE PATENTSCHRIFT

(11) **EP 4 405 670 B1**
(45) Veröffentlichungstag und Bekanntmachung des Hinweises auf die Patenterteilung: **04.02.2026**
(21) Anmeldenummer: 22802007.9
(22) Anmeldetag: 21.09.2022
(51) Int. Cl.: G01N 21/95, G01B 11/06, G01B 11/25

(54) **INSPEKTIONSSYSTEM UND VERFAHREN ZUR FEHLERANALYSE**
INSPECTION SYSTEM AND METHOD FOR ANALYZING FAULTS
SYSTÈME D'INSPECTION ET PROCÉDÉ D'ANALYSE DE DÉFAUT

(30) Priorität: 22.09.2021 DE 102021124507
(43) Veröffentlichungstag der Anmeldung: 31.07.2024
(73) Patentinhaber: Wickon Hightech GmbH, 94405 Landau (DE)
(72) Erfinder: WIESER, Roman, 94405 Landau / Isar (DE)
(74) Vertreter: advotec.
(86) Internationale Anmeldenummer: PCT/EP2022/076260
(87) Internationale Veröffentlichungsnummer: WO 2023/046771

(56) Entgegenhaltungen:
- EP-A1- 0 950 168
- EP-A2- 2 720 013
- WO-A1-02/082009
- CN-U- 207 556 477

## Beschreibung

Die Erfindung betrifft ein Inspektionssystem sowie ein Verfahren zur Fehleranalyse eines Produkts, insbesondere eines Leiterplattenprodukts, Halbleiterwafer oder dergleichen, wobei das Inspektionssystem eine Projektionsvorrichtung, eine optische Erfassungsvorrichtung und eine Verarbeitungsvorrichtung umfasst, wobei die Projektionsvorrichtung zumindest eine Spektrometereinrichtung aufweist, mittels der Weißlicht in seine spektralen Bestandteile aufteilbar und ein derart aus monochromatischen Lichtstrahlen gebildeter multichromatischer Lichtstrahl unter einem Einfallswinkel β auf ein Produkt projizierbar ist, wobei die optische Erfassungsvorrichtung eine Erfassungseinheit mit einer Flächenkamera und einem Objektiv aufweist, wobei in einer quer, vorzugsweise orthogonal zu einer Produktoberfläche des Produkts verlaufenden Erfassungsebene der Erfassungseinheit ein am Produkt reflektierter multichromatischer Lichtstrahl mittels der Flächenkamera erfassbar ist, wobei die Erfassungseinheit eine bildseitige Blende aufweist, wobei die Blende in der Erfassungsebene in dem Objektiv oder zwischen dem Objektiv und dem Produkt angeordnet ist, wobei der reflektierte multichromatische Lichtstrahl auf eine Bildebene der Flächenkamera projizierbar ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt und dem Einfallswinkel β eine Höheninformation der Produktoberfläche ableitbar ist.

Bei den bekannten Inspektionssystemen bzw. Verfahren zur Fehleranalyse eines Produkts kann ein Höhenprofil, beispielsweise einer Leiterplatte oder von auf einer Leiterplatte angeordneten Bauteilen, mittels eines spektroskopischen Verfahrens ermittelt werden. Das zu überprüfende Produkt kann dabei ein sogenanntes PCB (printed circuit board - Leiterplatte) oder eine photovoltaische Zelle sein. PCB's können unter anderem auch durch ein Bedrucken eines Leiterplattensubstrats mit einer leitfähigen Paste zur Ausbildung von Leiterbahnen oder elektronischen Bauteilen, wie beispielsweise Widerständen, ausgebildet werden. Dabei können verschiedene Materialien, wie beispielsweise Kupfer, Gold, Aluminium, Titan etc. auf das Substrat aufgebracht werden. Das Leiterplattenprodukt kann weiter mit bedrahteten Bauelementen oder auch sogenannten SMD-Bauelementen bestückt, mit Lötstopplack beschichtet und im Rahmen des jeweiligen Herstellverfahrens, durch beispielsweise Schwalllöten, belötet werden. Bei diesen Herstellverfahren können eine Reihe von Fehler, wie beispielsweise eine unvollständig bedruckte Leiterbahn, eine fehlerhafte Lötstelle oder ein fehlendes Bauteil auftreten, die zu einer Funktionsunfähigkeit des Leiterplattenprodukts führen können. Es ist daher regelmäßig erforderlich, das Leiterplattenprodukt im Rahmen seiner Herstellung auf eventuelle Fehler zu analysieren.

Eine derartige Fehleranalyse erfolgt dabei regelmäßig mit einem Inspektionssystem, welches eine Kamera zur Bildaufnahme des Leiterplattenprodukts aufweist. Die Kamera kann eine sogenannte Zeilenkamera mit in einer Zeile bzw. Reihe angeordneten optischen Sensoren bzw. auch mit drei Reihen bzw. Zeilen mit jeweils unterschiedlichen Sensoren (RGB-Sensoren) oder eine Flächenkamera mit mehr als drei Reihen bzw. Zeilen sein. Nachteilig bei den bekannten Inspektionssystemen ist, dass nur-Produkte bis zu einer bestimmten Größe mittels des Inspektionssystems mit ausreichender Bildqualität analysiert werden können, da eine Zeilen- bzw. Reihenlänge der optischen Sensoren der bekannten Kameras herstellungsbedingt begrenzt ist. Zur Fehleranalyse ist es daher ggf. erforderlich ein Produkt in mehreren Durchgängen zu scannen, um die gesamte Produktoberfläche, oder deren relevante Abschnitte zu erfassen.

Aus der EP 2 307 852 B1 ist ein Inspektionssystem bzw. ein Verfahren zur Fehleranalyse von PCB's bekannt, mit der bzw. dem eine Oberfläche des PCB's optisch vermessen werden kann. Dabei wird ein von einer Weißlichtquelle ausgehender polychromatischer Lichtstrahl durch ein Prisma geleitet, um einen multichromatischen Lichtstrahl zu erzeugen, der unter einem Einfallswinkel auf das Leiterplattenprodukt projiziert wird. Je nach Höhenunterschied einer Oberfläche des Leiterplattenprodukts erscheint die Oberfläche in Abhängigkeit ihrer Höhe in einer auf diese Höhe gerichteten Spektralfarbe des multichromatischen Lichtstrahls. Ein so von der betreffenden Oberfläche reflektierter monochromatischer Lichtstrahl wird mittels einer optischen Erfassungsvorrichtung, insbesondere einer Zeilenkamera, oder auch einer Zeile einer Flächenkamera, erfasst. Mittels einer Verarbeitungsvorrichtung bzw. einer Vorrichtung zur Datenverarbeitung kann dann unter Einstellung des gewünschten Einfallswinkels zur Ausrichtung des multichromatischen Lichtstrahls auf die Erfassungsebene und der Position des Leiterplattenprodukts relativ zur Zeilenkamera eine Höheninformation der betreffenden Oberfläche des Leiterplattenprodukts berechnet werden.

Nachteilig bei dem vorbeschriebenen Inspektionssystem bzw. Verfahren ist, dass eine Oberfläche des PCB's nicht immer zuverlässig detektiert werden kann. So kann es je nach Reflexionsgrad bzw. Farbe der Produktoberfläche zu Abweichungen bei einer Reflektion des betreffenden Lichtstrahls an der Produktoberfläche kommen. Zu einer verlässlichen Fehleranalyse sind daher regelmäßig mehrere Bildaufnahmen des Leiterplattenprodukts bzw. des PCB's erforderlich, oder das Produkt wird mit unterschiedlich farbigem Licht beleuchtet bzw. es werden mittels der Verarbeitungsvorrichtung die für eine Fehleranalyse am geeignetsten erscheinenden RGB-Kanäle weiterverarbeitet. Zur Erstellung eines Höhenprofils und zu der Gewinnung eines qualitativ guten Analysebildes des Produktes sind jedoch regelmäßig verschiedene Beleuchtungseinrichtungen mit jeweils zugeordneten Erfassungseinheiten erforderlich, wobei diese dann sequenziell oder in voneinander getrennten Durchgängen die Produktoberfläche scannen können. Die Fehleranalyse selbst und der konstruktive Aufbau des Inspektionssystems werden dadurch aufwändig. Ferner ist nachteilig, dass die erhaltene Höheninformation der betreffenden Oberfläche ungenau sein kann. Je nach Höhe der Oberfläche kommt es zu einer unscharfen Abbildung in einer Bildebene der optischen Erfassungsvorrichtung bzw. auf der Zeilenkamera oder der Flächenkamera. Eine Höhenmessung wird dadurch weniger genau, wobei sich diese Unschärfe auch nicht durch die Verwendung eines Kamerachips mit höherer Auflösung kompensieren lässt.

Aus der EP 0 950 168 A1 ist ein Inspektionssystem und ein Verfahren mit den Merkmalen des Oberbegriffs des Anspruch 1 bzw. Anspruch 13 bekannt.

Der vorliegenden Erfindung liegt die Aufgabe zugrunde, ein Inspektionssystem und ein Verfahren zur Fehleranalyse eines Produkts vorzuschlagen, welches mit einfachen Mitteln eine verlässliche Fehleranalyse ermöglicht.

Diese Aufgabe wird durch ein Inspektionssystem mit den Merkmalen des Anspruchs 1 und ein Verfahren mit den Merkmalen des Anspruchs 13 gelöst.

Das erfindungsgemäße Inspektionssystem zur Fehleranalyse eines Produkts, insbesondere eines Leiterplattenprodukts, Halbleiterwafer oder dergleichen, umfasst eine Projektionsvorrichtung, eine optische Erfassungsvorrichtung und eine Verarbeitungsvorrichtung, wobei die Projektionsvorrichtung zumindest eine Spektrometereinrichtung aufweist, mittels der Weißlicht in seine spektralen Bestandteile aufteilbar und ein derart aus monochromatischen Lichtstahlen gebildeter multichromatischer Lichtstrahl unter einem Einfallswinkel β auf ein Produkt projizierbar ist, wobei die optische Erfassungsvorrichtung eine Erfassungseinheit mit einer Flächenkamera und einem Objektiv aufweist, wobei in einer quer, vorzugsweise orthogonal zu einer Produktoberfläche des Produkts verlaufenden Erfassungsebene der Erfassungseinheit ein am Produkt reflektierter multichromatischer Lichtstrahl mittels der Flächenkamera erfassbar ist, wobei die Erfassungseinheit eine bildseitige Blende aufweist, wobei die Blende zumindest zwei Spalte ausbildet, wobei die Blende in der Erfassungsebene in dem Objektiv oder zwischen dem Objektiv und dem Produkt angeordnet ist, wobei der reflektierte multichromatische Lichtstrahl auf eine Bildebene der Flächenkamera projizierbar ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt und dem Einfallswinkel β eine Höheninformation der Produktoberfläche ableitbar ist.

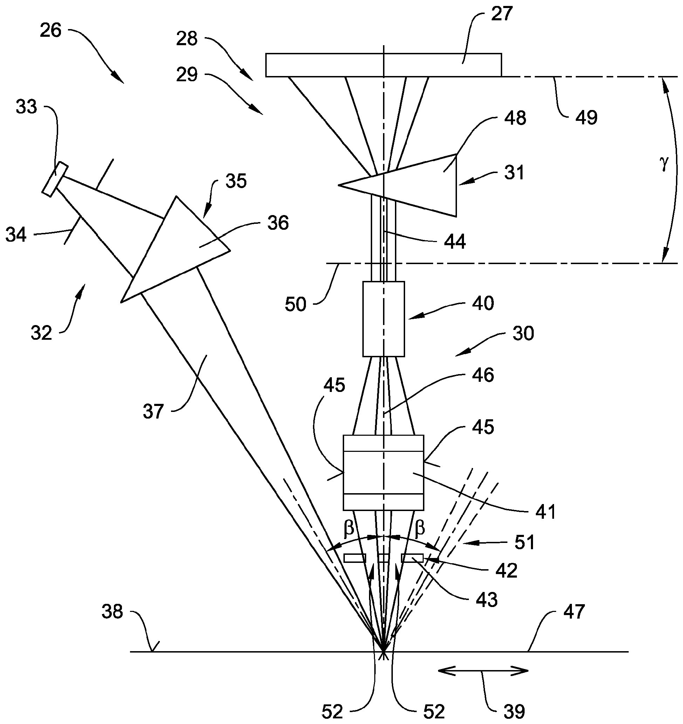

Je nach Höhenunterschied einer Produktoberfläche verschiebt sich aufgrund des auf die Erfassungsebene in dem Einfallswinkel β ausgerichteten multichromatischen Lichtstrahls, dessen Wellenlänge mit einer Höhe in der Erfassungsebene variiert, ein Reflexionsbild des multichromatischen Lichtstrahls auf der Produktoberfläche relativ zu einer optischen Achse des Objektivs bzw. zu der Erfassungsebene der Erfassungseinheit bzw. der Flächenkamera. Dies führt dazu, dass das betreffende Reflexionsbild in der Bildebene der Flächenkamera ebenfalls relativ zu der optischen Achse bzw. Erfassungsebene, in Abhängigkeit der Wellenlänge bzw. Höhe versetzt abgebildet wird. Durch eine Bestimmung eines Ortes der Abbildung in der Bildebene wird es dann möglich, mittels der Verarbeitungsvorrichtung eine Höheninformation der Produktoberfläche zu errechnen.

Die Blende kann in Richtung der Längsachse der Flächenkamera angeordnet bzw. ausgerichtet sein. Die Blende ist folglich mit zwei Schlitzmasken bzw. Spalten ausgebildet, die zwischen dem Produkt und dem Objektiv in dem Lichtstrahl angeordnet sind. Optional können auch mehr als zwei Schlitzmasken bzw. Spalte vorgesehen sein. Alternativ kann die Blende auch innerhalb des Objektivs angeordnet sein. Beide Spalten können symmetrisch relativ zu der Erfassungsebene positioniert sein. Durch die Verwendung der Blende wird es möglich, eine differenziertere und schärfere Trennung des auf die Bildebene der Flächenkamera projizierten Lichtstrahls zu erhalten. Insbesondere können dann zwei Bereiche der Bildebene der Flächenkamera detektiert werden, auf die der Lichtstrahl fällt. Unter anderem kann dann auch ein Abstand dieser Bereiche ermittelt werden. Durch diese Aufspaltung in einem Detektionspfand bzw. in dem Objektiv oder zwischen dem Objektiv und dem Produkt, können mehrere Bereiche bzw. Positionen der Flächenkamera zur Farberkennung verwendet werden. Insbesondere wenn ein Grauskalenchip als Flächenkamera verwendet wird, kann gegenüber einem RGB-Chip eine höhere Auflösung sowie eine exaktere Farbbestimmung durchgeführt werden. Auch benötigt der Grauskalenchip keine Farbfilter, so dass eine maximale Empfindlichkeit des Grauskalenchips genutzt werden kann. Insgesamt wird so eine verbesserte Auflösung einer Höhenmessung bzw. eine genauere Bestimmung der Höheninformation der Produktoberfläche möglich.

Weiter können mittels der Verarbeitungsvorrichtung an zwei Positionen in der Bildebene von jeweils zumindest zwei Sensorzeilen der Flächenkamera mit überdurchschnittlichen Sättigungswerten Zeilenbilder erfassbar sein. Eine Verschiebung des Reflexionsbildes in der Bildebene wird dann dadurch ermittelt, dass eine räumliche Verteilung bzw. eine Abbildungsbreite von Sättigungswerten mittels der Verarbeitungsvorrichtung ausgewertet wird. Aus der räumlichen Verteilung bzw. Abbildungsbreite der Sättigungswerte an den zwei Positionen ergibt sich der Ort der Verschiebung, da die Sensorzeilen der Flächenkamera mit den überdurchschnittlichen Sättigungswerten diesen repräsentieren. Daher ist es bereits ausreichend mittels der Verarbeitungsvorrichtung alleine jeweils zwei Sensorzeilen mit überdurchschnittlichen Sättigungswerten zu ermitteln und die auf diesen Sensorzeilen abgebildeten jeweiligen Zeilenbilder in der Bildebene zu erfassen. Damit wird nicht nur die Bestimmung der Höhe bzw. einer Topografie möglich, sondern es können gleichzeitig Zeilenbilder von der Produktoberfläche erfasst werden.

Je nach einer Position der räumlichen Verteilung von Sättigungswerten in der Bildebene der Flächenkamera kann eine Höheninformation der Produktoberfläche ableitbar sein. Dadurch, dass mit der Blende der durch das Objektiv verlaufende Lichtstrahl aufgespalten wird, wird die Bildebene der Flächenkamera differenzierter nutzbar. Es ergibt sich daher eine breite räumliche Verteilung von Sättigungswerten in der Bildebene der Flächenkamera. Auch über die breite räumliche Verteilung des Lichtstrahls in der Bildebene wird es möglich, eine noch genauere Höheninformation der Produktoberfläche zu erhalten. So kann über eine Verteilung der Sättigungswerte eine Wellenlänge bzw. ein Wellenlängenbereich des Lichtstrahls noch genauer analysiert und eine exaktere Farbinformation und damit eine Höheninformation gewonnen werden.

Die die Erfassungseinheit kann ein dispersives oder diffraktives Element aufweisen, welches im Strahlengang zwischen dem Objektiv und der Flächenkamera angeordnet ist. Durch die Verwendung des dispersiven oder diffraktiven Elements zusammen mit der Blende wird es möglich, eine weiter verbesserte Abbildung in der Bildebene zu erzielen. So kann der aus monochromatischen Lichtstrahlen gebildete, von dem Objekt reflektierte Lichtstrahl durch das dispersive oder diffraktive Element wieder aufgespalten werden. Je nach Wellenlänge bzw. Wellenlängenbereich des Lichtstrahls ändert sich die räumliche Verteilung von Sättigungswerten in der Bildebene bzw. ein Abstand von Positionen, so dass eine Wellenlänge bzw. Höheninformation noch genauer bestimmt werden kann.

Auch kann vorgesehen sein, ein weiteres optisches Element im Strahlengang zwischen dem Objektiv und der Flächenkamera so anzuordnen, dass ein Farblängsfehler entsprecht korrigiert wird. Die Erfassungseinheit kann demnach eine Korrekturvorrichtung aufweisen, wobei mittels der Korrekturvorrichtung eine longitudinale chromatische Aberration des reflektierten multichromatischen Lichtstrahls in der Bildebene korrigiert werden kann. Der multichromatische Lichtstrahl, der aus monochromatischen Lichtstrahlen gebildet ist, kann über das dispersive oder diffraktive Element auf die Bildebene der Erfassungsvorrichtung bzw. die Flächenkamera projiziert werden, wobei sich je nach Wellenlänge des monochromatischen Lichtstrahls, der Lichtstrahl die Höheninformation einer Objektfläche repräsentiert. So kann sich ein Längenversatz des betreffenden monochromatischen Lichtstrahls ergeben, was zu einer unscharfen Abbildung in der Bildebene für diesen Lichtstrahl führen kann. Die Korrekturvorrichtung ist dann dazu ausgebildet, diese longitudinale chromatische Aberration des multichromatischen Lichtstrahls bzw. der betreffenden monochromatischen Anteile für die Bildebene optisch zu korrigieren. Somit wird es möglich, unabhängig von einer Höheninformation bzw. einer Wellenlänge des betreffenden monochromatischen Lichtstrahls, der auf die Bildebene projiziert wird, stets eine im Wesentlichen scharfe Abbildung in der Bildebene und damit eine eindeutigere und genauere Höheninformation zu erhalten. Eine Auflösung einer Höhe kann so wesentlich verbessert werden.

Das dispersive oder diffraktive Element kann ein Prisma oder ein Beugungsgitter sein. In einer besonders einfachen Ausführungsform kann das Prisma ein Dispersionsprisma in Form eines beispielsweise gleichschenkligen Dreiecks sein.

Durch den Einsatz des dispersiven oder diffraktiven Elements, welches unmittelbar vor der Flächenkamera bzw. zwischen Flächenkamera und Objektiv angeordnet ist, können Zeilenbilder in unterschiedlichen Farbabstufungen erhalten werden. Dabei werden Farben, die von der Produktoberfläche besonders gut reflektiert werden auf die Flächenkamera bzw. die Bildebene projiziert und weisen hier hohe Sättigungswerte auf.

Alternativ kann die Bildebene der Flächenkamera kann relativ zu einer Hauptebene des Objektivs um einen Winkel γ ≠ 0° geneigt sein, derart, dass die Bildebene an die longitudinale chromatische Aberration des reflektierten multichromatischen Lichtstrahls angepasst ist. Die Korrekturvorrichtung kann folglich bereits dadurch ausgebildet sein, dass die Bildebene der Flächenkamera relativ zu der Hauptebene des Objektivs geneigt ist. Die Bildebene und die Hauptebene sind dann nicht mehr parallel relativ zueinander angeordnet. Die Bildebene ist dann prinzipiell auch relativ zu einer optischen Achse der Erfassungsvorrichtung bzw. des Objektivs geneigt. Durch diese Neigung kann der sonst auftretende Farblängsfehler so korrigiert werden, dass unabhängig von der Wellenlängen der jeweiligen monochromatischen Lichtstrahlen, die auf die Bildebene projiziert werden, stets eine vergleichsweise scharfe Abbildung ausbildet wird.

Mittels der Verarbeitungsvorrichtung kann aus einer Mehrzahl von Zeilenbildern ein Analysebild des Produkts abgeleitet werden. Die erfassten Zeilenbilder können dann im Rahmen eines Scanvorgangs von der Verarbeitungsvorrichtung zu einem Analysebild der Produktoberfläche kombiniert werden. Insbesondere können so alleine im Rahmen eines einzigen Scans der Produktoberfläche Höheninformationen und gleichzeitig ein qualitativ hochwertiges Analysebild gewonnen werden.

Mittels des Objektivs kann ein Zeilenbild von einer Objektebene der Produktoberfläche auf eine Bildebene der Flächenkamera abgebildet werden, wobei die Flächenkamera quer, vorzugsweise orthogonal zu einer Bewegungsrichtung eines Produkts angeordnet sein kann. Beispielsweise kann die Flächenkamera eine rechteckige Sensorfläche aufweisen, wodurch dann eine Erfassungsbreite, bezogen auf eine Produktoberfläche, optimal ausgenutzt werden kann. Das Objektiv dient dann dazu, ein Zeilenbild, welches einem am Produkt reflektierten multichromatischen Lichtstrahls, der von dem Objektiv erfassbar ist, entspricht, in der Bildebene der Flächenkamera abzubilden. Durch ein zwischen dem Objektiv und der Flächenkamera angeordnete dispersive Element ist ein Strahlengang divergent bzw. erfolgt die Abbildung in der Bildebene aufgrund der Lichtbrechung des dispersiven Elements entsprechend dem Spektrum der Spektrometereinrichtung und dem am Produkt reflektierten multichromatischen Lichtstrahls mit einer spektralen Verteilung auf der Bildebene.

Die Flächenkamera kann durch einen RGB-Chip oder einen Grauskalenchip ausgebildet sein, der relativ quer, vorzugsweise orthogonal zu einer Bewegungsrichtung eines Produkts 32 bis 128 Sensorzeilen, vorzugsweise 32 bis 64 Sensorzeilen aufweisen. Beispielsweise kann die Flächenkamera 1024 Pixel x 36 Sensorzeilen, 2048 Pixel x 72 Sensorzeilen, 4096 Pixel x 128 Sensorzeilen, 16.384 Pixel x 256 Sensorzeilen oder mehr aufweisen. Mit einem Grauskalenchip kann prinzipiell eine höhere Auflösung erzielt werden, da hier alle Sensorzeilen des Grauskalenchips unabhängig von einer Wellenlänge des Lichts nutzbar sind. Gleichwohl ist es auch möglich, einen RGB-Chip zu nutzen.

Die Projektionsvorrichtung kann Licht der Wellenlängenbereiche Rot, Grün, Blau (RGB), Infrarot (IR) und/oder Ultraviolett (UV), vorzugsweise in einem Wellenlängenbereich von 400 bis 700 nm emittieren und die Flächenkamera kann dieses Licht erfassen.

Das Inspektionssystem kann eine weitere Projektionsvorrichtung aufweisen, wobei die Projektionsvorrichtungen symmetrisch relativ zu der Erfassungsebene angeordnet sein können. Dadurch, dass die Projektionsvorrichtungen symmetrisch zu der Erfassungsebene angeordnet sind, kann eine Schattenbildung durch Licht auf der Produktoberfläche vorteilhaft vermieden werden. So werden dann auch im Wesentlichen schattenfreie Bildaufnahmen eines Produktes möglich.

Die weitere Projektionsvorrichtung kann Licht mit einem von der Projektionsvorrichtung abweichenden Wellenlängenbereich oder einem übereinstimmenden Wellenlängenbereich emittieren. Die weitere Projektionsvorrichtung kann mit der Projektionsvorrichtung identisch ausgebildet sein. Gleichwohl kann vorgesehen sein, dass mit der weiteren Projektionsvorrichtung Licht eines anderen Wellenlängenbereichs emittiert wird. So ist es dann auch möglich, dass in dem mit der Flächenkamera erfassten Bild die jeweilige Projektionsvorrichtung zurückgerechnet werden kann. Es können sich dann auch mehrere voneinander beabstandete Bereiche mit überdurchschnittlichen Sättigungswerten in der Bildebene der Flächenkamera ergeben. So ist es dann auch möglich, viele verschiedene Merkmale des Produkts mit einer Bildaufnahme zu generieren. Wenn die Projektionsvorrichtung und die weitere Projektionsvorrichtung Licht in unterschiedlichen oder übereinstimmenden Wellenbereichen verwendet, kann das Produkt zum selben Zeitpunkt mit Licht einer kürzeren Wellenlänge und mit Licht einer längeren Wellenlänge beleuchtet werden. Besonders vorteilhaft ist hier, dass durch die Blende eine scharfe Trennung von Beleuchtungsquellen bzw. der Projektionsvorrichtung und der weiteren Projektionsvorrichtung auf der Erfassungsebene der Flächenkamera erfolgen kann. Es kann dann besonders gut zwischen Licht der Projektionsvorrichtung und Licht der weiteren Projektionsvorrichtung differenziert werden. Sofern vorhanden kann das dispersive oder diffraktive Element dann dieses Licht, welches vom Produkt reflektiert wird, wieder separieren. Insgesamt wird so eine noch genauere Höheninformation ermittelbar. Auch können insgesamt drei oder mehr übereinstimmende oder voneinander verschiedene Projektionsvorrichtungen vorgesehen sein. So können mit einer Mehrzahl Projektionsvorrichtungen in einem einzigen Scan mehrere Bildaufnahmen generiert werden. Dadurch kann eine Inspektion von Produkten wesentlich beschleunigt werden. Auch kann das Produkt auf eine Vielzahl von Fehlerarten, die zur optimalen Erkennung ggf. eine unterschiedliche Beleuchtung erfordern, zeitgleich geprüft werden.

Die weitere Projektionsvorrichtung kann Licht mit einem von der Projektionsvorrichtung abweichenden Höhe in der Erfassungsebene, relativ bezogen auf die Objektebene, emittieren. So kann alternativ vorgesehen sein, dass die weitere Projektionsvorrichtung und die Projektionsvorrichtung relativ zur Produktoberfläche unterschiedlich hoch angeordnet sind, um so die Produktoberfläche in einer Höhe mit unterschiedlichen Wellenlängenbereichen zu beleuchten.

Das Objektiv kann ein telezentrisches Objektiv sein. Innerhalb des Objektivs kann dann der Strahlengang des Objektivs zumindest abschnittsweise parallel verlaufen. Die bildseitige Blende bzw. Aperturblende kann in einer objektseitigen Brennebene des Objektivs angeordnet sein. Folglich kann das Objektiv auch ein teilweise telezentrisches Objektiv sein.

Das Objektiv kann eine Frontlinse aufweisen, die als eine Sammellinse und/oder als ein Achromat ausgebildet ist. Der Achromat kann aus zumindest zwei Linsen zusammengesetzt sein, wobei die Linsen des Achromats miteinander verklebt oder lediglich unter Ausbildung eines sehr dünnen Luftspalts ineinander gesetzt sind. Der Luftspalt zwischen den Linsen kann beispielsweise bis zu 100 µm betragen. Dadurch wird es möglich, besonders kostengünstig einen Achromat auszubilden und auf ein Verkleben der Linsen zu verzichten. Durch die Verwendung eines Achromats wird es möglich Farbfehler oder Verzeichnungsfehler zu korrigieren.

Die Frontlinse kann eine zylindrische oder sphärische Linse sein. Ggf. ist es ausreichend, als Frontlinse alleine eine zylindrische Linse zu verwenden, da lediglich ein Lichtspalt in der Bildebene bzw. das Zeilenbild abgebildet werden muss. Durch die Verwendung der zylindrischen Linse wird es möglich, Kosten bei der Herstellung des Inspektionssystems einzusparen.

Die Frontlinse kann kreissegmentförmig mit zwei koaxialen und parallelen Begrenzungsflächen ausgebildet sein. Wenn die Frontlinse eine zylindrische Linse ist, können die Ränder der Frontlinse soweit abgetrennt werden, dass eine stabförmige Linse verbleibt, die eine Hauptachse der zylindrischen Linse mit einschließt. Wenn die Frontlinse eine sphärische Linse ist, können auch Begrenzungsflächen an den äußeren Enden der Frontlinse parallel ausgebildet sein, wobei die Frontlinse dann nur näherungsweise einem Kreissegment entsprechen kann. Mittels einer derart ausgebildeten stabförmigen Frontlinse wird es möglich, einen Bauraum neben der Erfassungseinheit im Vergleich zu einer vollständig kreisförmigen Frontlinse einzusparen und diesen Bauraum dann zur Anordnung der Projektionsvorrichtung bzw. einer Beleuchtungseinrichtung zu nutzen. Das Inspektionssystem wird dann besonders kompakt ausbildbar.

Ein Kreissegment der Frontlinse kann eine Tiefe von < 20 mm, vorzugsweise 10 mm aufweisen, wobei die Frontlinse eine Breite von > 250 mm, vorzugsweise 180 mm aufweisen kann. Unter der Breite der Frontlinse kann auch ein Durchmesser der Frontlinse verstanden werden. Die Tiefe der Frontlinse kann einem Relativabstand der parallelen Begrenzungsflächen entsprechen.

Die optische Erfassungsvorrichtung kann zumindest eine zweite Erfassungseinheit mit einer zweiten Flächenkamera, einem zweiten dispersiven oder diffraktiven Element und einem zweiten Objektiv aufweisen, wobei die Flächenkameras relativ zueinander in Richtung ihrer Längsachsen fluchtend angeordnet sein können, wobei die Flächenkameras, in einem Abstand relativ zueinander, derart angeordnet sein können, dass die von den Flächenkameras in einer gemeinsamen Erfassungsebene von der Objektebene erfassbaren jeweiligen Zeilenbilder der Flächenkameras abschnittsweise überlappen können, wobei mittels der Verarbeitungsvorrichtung die überlappenden Zeilenbilder zu einem Kombinationszeilenbild zusammensetzbar bzw. kombinierbar sein können, wobei mittels der Verarbeitungsvorrichtung aus einer Mehrzahl von Kombinationszeilenbildern ein Analysebild des Produkts ableitbar sein kann.

Die zweite Erfassungseinheit der optischen Erfassungsvorrichtung kann so mit der zweiten Flächenkamera und dem zweiten Objektiv angeordnet sein, dass die Flächenkameras in einer Reihe, bezogen auf ihre Längsachsen, und damit quer zu der Bewegungsrichtung positioniert sind. Die Flächenkameras können dabei in einem Abstand relativ zueinander, jedoch benachbart angeordnet sein. Die Zeilenbilder in der Objektebene sind dabei vergleichsweise größer, als die Zeilenbilder in der Bildebene der Flächenkamera, sodass es dann möglich wird, die Erfassungseinheiten bzw. Flächenkameras so anzuordnen, dass die jeweiligen Zeilenbilder der Flächenkameras an ihren Längsenden abschnittsweise überlappen, d. h. dass mit den Flächenkameras übereinstimmende Abschnitte (b) der Produktoberfläche jeweils erfasst werden können. Die Verarbeitungsvorrichtung kann so eingerichtet sein, dass sie diese überlappenden Zeilenbilder zu einem Kombinationszeilenbild zusammensetzen bzw. kombinieren kann. So wird es prinzipiell möglich, durch eine Aneinanderreihung von Flächenkameras bzw. Erfassungseinheiten ein Inspektionssystem auszubilden, welches eine nahezu beliebig große Erfassungsbreite (E) aufweist. Eine Gesamtbreite eines Produkts kann dann in einem Scandurchgang erfasst werden, wobei die Kombinationszeilenbilder zu dem Analysebild des Produkts mittels der Verarbeitungsvorrichtung zusammengesetzt werden können.

Das Kombinationszeilenbild kann in der Objektebene eine Erfassungsbreite (E) aufweisen, die größer ist als eine erfassbare Breite (B) des Zeilenbildes in der Objektebene. Folglich überdecken sich die jeweiligen Zeilenbilder nicht vollständig, sondern nur in einem Überdeckungsabschnitt (b). Beispielsweise kann der Überdeckungsabschnitt 1 mm bis 3 mm groß sein.

Eine erfassbare Breite (B) des Zeilenbildes in der Objektebene kann größer sein als ein Durchmesser (D) des Objektivs oder eine Länge (L) der Flächenkamera. Somit wird es überhaupt erst möglich, Flächenkameras mit fluchtenden Längsachsen nebeneinander anzuordnen und dennoch ein ungeteiltes Kombinationszeilenbild zu erhalten. Unter dem Durchmesser des Objektivs wird ein maximales Außenmaß des Objektives und unter der Länge der Flächenkamera eine maximale Außenlänge der Flächenkamera verstanden.

Eine optische Achse des Objektivs kann relativ zu der Objektebene und quer zu der Bewegungsrichtung orthogonal angeordnet sein, wobei ein konvergenter Strahlengang des Objektivs unter einem Winkel α > 80° und < 90° relativ zu der Objektebene verlaufen kann. Durch den konvergenten Strahlengang des Objektivs wird es dann möglich die Zeilenbilder der Objektebene abschnittsweise in Überdeckung zu bringen, und gleichzeitig die Erfassungseinheiten nebeneinander, ggf. mit einem Zwischenraum beabstandet anzuordnen. Die optischen Achsen der jeweiligen Objektive können dann in der Erfassungsebene parallel angeordnet sein.

Besonders vorteilhaft ist es, wenn die Zeilenbilder 1 mm bis 3 mm überlappen. Die Verarbeitungsvorrichtung kann dann so eingerichtet sein, dass die Zeilenbilder anhand übereinstimmender Pixel in den Überlappungsbereichen zu dem Kombinationszeilenbild zusammengesetzt werden. Durch die Addition der Zeilenbilder in dem Überlappungsbereich wird es möglich, in dem Überlappungsbereich eine besonders gute Abbildungsqualität zu erzielen. Ggf. kann dann auch das Objektiv im Randbereich seiner erfassbaren Breite Abbildungsfehler aufweisen, die dann tolerierbar sind.

Die Projektionsvorrichtung kann eine Beleuchtungseinrichtung aufweisen, wobei mittels der Beleuchtungseinrichtung diffuses Licht auf das Produkt projizierbar sein kann, wobei am Produkt in der Erfassungsebene reflektiertes Licht des diffusen Lichts mittels der Flächenkamera erfassbar sein kann. Die Beleuchtungseinrichtung kann einen Diffusor aufweisen, mittels dem eine homogene Verteilung des Lichts auf der Produktoberfläche bei gleichzeitiger Vermeidung starker Kontraste erzielt werden kann. Die Beleuchtungseinrichtung kann Licht der Wellenlängenbereiche Rot, Grün und Blau (RGB), Infrarot (IR) und/oder Ultraviolett (UV) emittieren. Auch kann vorgesehen sein, Farbanteile des Lichts beliebig auszuwählen, um bestimmte Wellenlängenbereiche zu mischen. Die Beleuchtungseinrichtung kann jeweils aus einer Anzahl von Leuchtioden (LED) in einer Reihenanordnung oder einer Matrixanordnung ausgebildet sein. Weiter kann vorgesehen sein, dass die Beleuchtungseinrichtung einen Polarisationsfilter aufweist.

Die Projektionsvorrichtung kann eine zweite Beleuchtungseinrichtung aufweisen, wobei die erste und die zweite Beleuchtungseinrichtung relativ zur optischen Erfassungsvorrichtung koaxial angeordnet sein können. Die Beleuchtungseinrichtungen können ebenfalls quer bzw. orthogonal zu der Bewegungsrichtung des Produkts angeordnet sein. So wird eine eventuelle Bildung von Schatten auf der Produktoberfläche vermieden. Die zweite Beleuchtungseinrichtung kann dabei in ihrem Aufbau der ersten Beleuchtungseinrichtung entsprechen.

Bei dem erfindungsgemäßen Verfahren zur Fehleranalyse eines Produkts, insbesondere eines Leiterplattenprodukts, Halbleiterwafer oder dergleichen, mit einem Inspektionssystem, welches eine Projektionsvorrichtung, eine optische Erfassungsvorrichtung und eine Verarbeitungsvorrichtung umfasst, wird mittels einer Spektrometereinrichtung der Projektionsvorrichtung Weißlicht in seine spektralen Bestandteile aufgeteilt und ein derart aus monochromatischen Lichtstahlen gebildeter multichromatischer Lichtstrahl unter einem Einfallswinkel β auf ein Produkt projiziert, wobei die optische Erfassungsvorrichtung eine Erfassungseinheit mit einer Flächenkamera und einem Objektiv aufweist, wobei in einer quer, vorzugsweise orthogonal zu einer Produktoberfläche des Produkts verlaufenden Erfassungsebene der Erfassungseinheit ein multichromatischer Lichtstrahl am Produkt reflektiert wird, der mittels der Flächenkamera erfasst wird, wobei der reflektierte multichromatische Lichtstrahl mittels einer bildseitigen Blende auf eine Bildebene der Flächenkamera projiziert wird, wobei die Blende zumindest zwei Spalte ausbildet, wobei die Blende in der Erfassungsebene in dem Objektiv oder zwischen dem Objektiv und dem Produkt angeordnet ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt und dem Einfallswinkel β eine Höheninformation der Produktoberfläche abgeleitet wird. Hinsichtlich der vorteilhaften Wirkungen des erfindungsgemäßen Verfahrens wird auf die Vorteilsbeschreibung des erfindungsgemäßen Inspektionssystems verwiesen.

Mittels der Verarbeitungsvorrichtung können von zumindest drei, vorzugsweise fünf Sensorzeilen der Flächenkamera mit den höchsten Sättigungswerten gleichzeitig Zeilenbilder erfasst werden. Beispielsweise ist es dann auch möglich zumindest zwei der Sensorzeilen bzw. deren Zeilenbilder einander zu überlagern, um ein qualitätsoptimiertes, einzelnes Zeilenbild zu erhalten. Gleichzeitig wird dann auch eine zu verarbeitende Datenmenge gering sein, was eine schnelle Verarbeitung der Bilddaten und damit einen schnellen Scan des Produkts ermöglicht. Durch die Überlagerung der Zeilenbilder wird es möglich lediglich ein Zeilenbild von dem reflektierten multichromatischen Lichtstrahl mit der Flächenkamera zu erfassen. Die Flächenkamera wird daher gleichzeitig zur Topografiebestimmung und zur Auswahl gut verwertbarer Zeilenbilder verwendet.

Mittels einer weiteren Projektionsvorrichtung des Inspektionssystems kann Licht mit einem von der Projektionsvorrichtung abweichenden Wellenlängenbereich oder einem übereinstimmenden Wellenlängenbereich emittiert werden, wobei mit der Flächenkamera gleichzeitig Zeilenbilder der Projektionsvorrichtung und der weiteren Projektionsvorrichtung erfasst werden können. So kann auch mittels der Verarbeitungsvorrichtung eine Analyse der Bildinformationen bzw. RGB-Farbinformationen getrennt nach dem Farbwert (hue), der Farbsättigung (saturation) und Hellwert (value) in einem Farbraum (HSV, HSL, HSB) durchgeführt werden.

Mittels der Verarbeitungsvorrichtung kann aus einer räumlichen Verteilung von Sättigungswerten des reflektierten multichromatischen Lichtstrahls der weiteren Projektionsvorrichtung in der Bildebene, einer Position der optischen Erfassungseinheit relativ zum Produkt und dem Einfallswinkel β eine weitere Höheninformation der Produktoberfläche abgeleitet werden. Über die breitere räumliche Verteilung des Lichtstrahls in der Bildebene wird es möglich, eine noch genauere Höheninformation der Produktoberfläche zu erhalten. So kann über eine Verteilung der Sättigungswerte eine Wellenlänge bzw. ein Wellenlängenbereich des Lichtstrahls noch genauer analysiert und eine exaktere Farbinformation und damit eine Höheninformation gewonnen werden.

Die Bildebene bzw. eine Abbildung in der Bildebene der Flächenkamera kann daher mittels der Verarbeitungseinrichtung hinsichtlich Farbton, Helligkeit und/oder Sättigung analysiert werden. Die Bildinformationen können insbesondere zur Analyse der Materialart und Verteilung verwendet werden, da verschiedene Materialien verschiedene H-, S- und V-Werte aufweisen. Eine Auswahl eines Farbraums kann in Abhängigkeit von den zu analysierenden Materialien erfolgen, wobei als Basis ein RGB-Farbraum dienen kann.

Mittels der Verarbeitungseinrichtung kann aus dem Analysebild ein Material, eine Materialeigenschaft und/oder eine geometrische Struktur des Produkts bestimmt werden und/oder ein Vergleich des Analysebilds mit einem Referenzbild erfolgen. Weitere Material-Strukturinformationen eines Produkts können gewonnen werden, wenn mittels der Verarbeitungsvorrichtung Zeilenbilder des Analysebildes überlagert und ausgewertet werden. Dabei können dann beispielsweise zwei Zeilenbilder einer übereinstimmenden Produktfläche mittels Bildverarbeitung der Verarbeitungsvorrichtung kombiniert werden. Optional kann auch eine Beleuchtung mittels der Spektrometereinrichtung in einer Abfolge erfolgen. Dabei wird zunächst eine erste Analysebildaufnahme bei alleine einer Beleuchtung in einem Wellenlängenbereich und nachfolgend eine zweite Analysebildaufnahme alleine bei einer Beleuchtung in einem davon abweichenden Wellenlängenbereich einer überstimmenden Produktfläche aufgenommen. Abschließend werden die Analysebilder mittels Bildverarbeitung kombiniert. Weiter kann im Rahmen einer Fehleranalyse mittels der Verarbeitungsvorrichtung ein Vergleich von Analysebildinformation bzw. Analysebildern mit Referenzbildern erfolgen. Die Referenzbilder des Produkts können CAD-Daten und Materialverteilungsdaten des Produkts umfassen. Der Vergleich kann durch Bildverarbeitung erfolgen, wobei für unterschiedliche Strukturen des Produkts jeweils getrennt voneinander Differenzbilder analysiert werden können. Weiter können diese Materialinformationen mit Höheninformationen kombiniert werden, um beispielsweise eine Leiterbahn eindeutig zu identifizieren. Die Referenzbildinformationen können demnach sämtliche geometrische Daten des Produkts, Materialinformationen, Bauteilinformationen und auch Höheninformationen umfassen. Weichen die Analysebildinformationen von den Referenzbildinformationen ab, kann ein Fehler signalisiert werden.

So können zumindest zwei oder mehr Zeilenbilder einer übereinstimmenden Produktoberfläche mittels Bildverarbeitung der Verarbeitungsvorrichtung kombiniert werden. Hierdurch kann ein sogenanntes HDR-Bild (High Dynamic Range Image) erhalten werden. Eine abgestufte Reihe von Belichtungen kann durch eine angepasste Beleuchtung mittels der Spektrometereinrichtung und/oder eine entsprechend abweichende Erfassung der Sensorzeilen der Flächenkamera mittels der Verarbeitungsvorrichtung erzielt werden. Beispielsweise kann ein 12 Bit-Analysebild der Flächenkamera, in dem mehrere Helligkeiten im 8 Bit-Format integriert sind, mittels der Verarbeitungsvorrichtung ausgelesen werden. Insgesamt kann so ein Farbort eines Farbraums eines Pixels des betreffenden Analysebildes noch genauer bestimmt werden.

Weitere vorteilhafte Ausführungsformen des Verfahrens ergeben sich aus den Merkmalsbeschreibungen der auf den Vorrichtungsanspruch zurückbezogenen Unteransprüche.

Nachfolgend wird eine bevorzugte Ausführungsform der Erfindung unter Bezugnahme auf die beigefügte **Figur** näher erläutert. Die **Figur** zeigt eine vereinfachte Prinzipdarstellung einer Ausführungsform eines Inspektionssystems 26 in einer Seitenansicht. Das Inspektionssystem 26 weist eine Flächenkamera 27 auf. Weiter ist eine Erfassungsvorrichtung 28 mit einer Erfassungseinheit 29, umfassend die Flächenkamera 27, ein Objektiv 30 und ein dispersives Element 31, zusammen mit einer Projektionsvorrichtung 32 dargestellt. Die Projektionsvorrichtung 32 weist eine Lichtquelle 33, die Weißlicht emittiert, eine Blende 34 und ein weiteres dispersives Element 35 auf. Das weitere dispersive Element 35 ist als ein weiteres Prisma 36 ausgebildet, mittels dem ein multichromatischer Lichtstrahl 37 auf eine Produktoberfläche 38 quer zu einer mit einem Pfeil 39 gekennzeichneten Bewegungsrichtung des hier nicht näher darstellten Produkts, projiziert wird.

Das Objektiv 30 umfasst eine Linsenanordnung 40, die hier schematisch dargestellt ist, eine Frontlinse 41 sowie eine bildseitig angeordnete Blende 42. Die Blende 42 ist insbesondere als eine Spaltblende 43 ausgebildet. Die Frontlinse 41 ist kreissegmentförmig ausgebildet und weist zwei parallele und koaxial zu einer optischen Achse 44 angeordnete Begrenzungsflächen 45 auf. Die optische Achse 44 verläuft durch eine Erfassungsebene 46 der Erfassungseinheit 29, wobei die Erfassungsebene 46 relativ zu der Produktoberfläche 38, welche einer Objektebene 47 entspricht, orthogonal angeordnet ist. Der multichromatische Lichtstrahl 37 fällt somit unter einem Winkel β relativ zur Erfassungsebene 46 auf die Produktoberfläche 38 bzw. die Objektebene 47 und wird von dort in das Objektiv 30 reflektiert. Zwischen dem Objektiv 30 und der Flächenkamera 27 ist das dispersive Element 31 angeordnet, welches als ein Prisma 48 ausgebildet ist. Das Prisma 48 dispergiert das aus dem Objektiv 30 austretende Licht und projiziert es auf die Flächenkamera 27 bzw. deren Bildebene 49. Weiter ist hier eine nicht näher dargestellte Korrekturvorrichtung vorgesehen, mittels der eine longitudinale chromatische Aberration des reflektierten multichromatischen Lichtstrahls in der Bildebene 49 korrigiert wird. Die Korrekturvorrichtung kann bereits dadurch ausgebildet sein, dass die Bildebene 49 relativ zu einer Hauptebene 50 des Objektivs 30 verschwenkt bzw. nicht parallel ist. Zwischen der Bildebene 49 und der Hauptebene 50 ist dann ein Winkel γ ≠ 0 ausgebildet. Die Neigung der Bildebene 49 ist so gewählt, dass unabhängig von einer Wellenlänge des von dem Prisma 48 dispergierten Lichtes dieses in der Bildebene 49 hinreichend scharf abgebildet wird. Alternativ kann auch alleine oder ergänzend ein weiteres optisches Element, welches hier nicht dargestellt ist, zwischen dem Objektiv 30 und der Bildebene 49 auf der optischen Achse 44 angeordnet sein, welches die longitudinale chromatische Aberration entsprechend korrigiert.

Aufgrund einer räumlichen Verteilung des reflektierten multichromatischen Lichtstrahls 37 auf der Flächenkamera 27 wird mittels hier nicht dargestellten Verarbeitungsvorrichtung eine Höheninformation der Produktoberfläche 38 relativ zu der Flächenkamera 27 abgeleitet. Dazu werden hier nicht näher dargestellte Sensorzeilen der Flächenkamera 27, die parallel zu der Erfassungsebene 46 verlaufen, ausgewertet, wobei fünf Sensorzeilen mit den höchsten bzw. maximalen Sättigungswerten erfasst werden. Aus einer Lage der Sensorzeilen relativ zu der Erfassungsebene 46 und dem Einfallswinkel β kann dann die Höheninformation errechnet werden. Diese Höheninformation ist dabei unabhängig von einer Höhe der Produktoberfläche 38 immer gleichbleibend genau, da die Genauigkeit aufgrund der Verwendung der Korrekturvorrichtung unabhängig von einer Wellenlänge des auf die Erfassungsebene 46 projizierten Lichts ist. Weiter wird mittels der Verarbeitungsvorrichtung eine Überlagerung der Sensorzeilen bzw. deren Zeilenbilder durchgeführt. Diese Zeilenbilder werden wiederum zu einem Analysebild des Produkts zusammengesetzt.

Weiter kann eine hier andeutungsweise dargestellte weitere Projektionsvorrichtung 51 des Inspektionssystems 26 vorgesehen sein. Die weitere Projektionsvorrichtung 51 ist vom Aufbau identisch mit der Projektionsvorrichtung 32 und relativ zu der Erfassungsebene 46 mit der Projektionsvorrichtung 32 symmetrisch angeordnet. Insbesondere ist die weitere Projektionsvorrichtung 51 ebenfalls mit dem Einfallswinkel β relativ zu der Erfassungsebene 46 positioniert. Mit der weiteren Projektionsvorrichtung 51 wird Licht mit einem von der Projektionsvorrichtung 32 abweichenden Wellenlängenbereich auf die Produktoberfläche 38 emittiert. Mit der Flächenkamera 27 können dann gleichzeitig Zeilenbilder in den jeweiligen Wellenlängenbereichen der Projektionsvorrichtung 32 und der weiteren Projektionsvorrichtung 51 erfasst werden. So können alleine mit einer einzigen Bildaufnahme zumindest zwei dreidimensionale Bilder der Produktoberfläche 38 generiert werden. Da beide dreidimensionalen Bilder auf Licht mit unterschiedlichen Wellenlängenbereichen basieren, können weitere Merkmale der Produktoberfläche 38 sowie eine noch genauere Höheninformation erhalten werden.

Die Spaltblende 43 weist zwei Spalte 52 auf, die in Richtung einer Längsachse bzw. der Erfassungsebene 46 der Flächenkamera 27 verlaufend ausgerichtet sind. Die Spalte 32 sind relativ zu der Erfassungsebene 46 symmetrisch angeordnet. Das von der Produktoberfläche 38 reflektierte Licht gelangt durch die Spalte 52 und das Objektiv 30 auf die Bildebene 49 der Flächenkamera 27, wobei das dispersive Element 31 das Licht in Abhängigkeit seiner Wellenlänge ablenkt. Durch die beiden Spalte 52 wird es auch möglich, eine scharfe Trennung zwischen Licht der Projektionsvorrichtung 32 und der weiteren Projektionsvorrichtung 51 durchzuführen. Eine Differenzierung ist hier besonders einfach möglich, da die Spaltblende 43, je nach reflektierender Wellenlänge an der Produktoberfläche 38 in Abhängigkeit der Projektionsvorrichtung 32 bzw. der weiteren Projektionsvorrichtung 51 ein abweichendes Muster auf der Bildebene 49 erscheinen lässt.

## Patentansprüche

1. Inspektionssystem (26) zur Fehleranalyse eines Produkts, insbesondere eines Leiterplattenprodukts, Halbleiterwafer oder dergleichen, wobei das Inspektionssystem eine Projektionsvorrichtung (32), eine optische Erfassungsvorrichtung (28) und eine Verarbeitungsvorrichtung umfasst, wobei die Projektionsvorrichtung zumindest eine Spektrometereinrichtung aufweist, mittels der Weißlicht in seine spektralen Bestandteile aufteilbar und ein derart aus monochromatischen Lichtstrahlen gebildeter multichromatischer Lichtstrahl (37) unter einem Einfallswinkel β auf ein Produkt projizierbar ist, wobei die optische Erfassungsvorrichtung eine Erfassungseinheit (29) mit einer Flächenkamera (27) und einem Objektiv (28) aufweist, wobei in einer quer, vorzugsweise orthogonal zu einer Produktoberfläche (38) des Produkts verlaufenden Erfassungsebene (46) der Erfassungseinheit der am Produkt reflektierte multichromatische Lichtstrahl (37) mittels der Flächenkamera erfassbar ist, wobei die Erfassungseinheit eine bildseitige Blende (42) aufweist, wobei die Blende in der Erfassungsebene in dem Objektiv oder zwischen dem Objektiv und dem Produkt angeordnet ist, wobei der reflektierte multichromatische Lichtstrahl auf eine Bildebene (49) der Flächenkamera projizierbar ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt und dem Einfallswinkel β eine Höheninformation der Produktoberfläche ableitbar ist,
**dadurch gekennzeichnet,**
**dass** die Blende zumindest zwei Spalte (52) ausbildet.

2. Inspektionssystem nach Anspruch 1,
**dadurch gekennzeichnet,**
**dass** mittels der Verarbeitungsvorrichtung an zwei Positionen in der Bildebene (49) von jeweils zumindest zwei Sensorzeilen der Flächenkamera (27) mit überdurchschnittlichen Sättigungswerten Zeilenbilder erfassbar sind.

3. Inspektionssystem nach Anspruch 1 oder 2,
**dadurch gekennzeichnet,**
**dass** je nach einer Position der räumlichen Verteilung von Sättigungswerten in der Bildebene (49) der Flächenkamera (27) eine Höheninformation der Produktoberfläche ableitbar ist.

4. Inspektionssystem nach einem der vorangehenden Ansprüche,
**dadurch gekennzeichnet,**
**dass** die Erfassungseinheit (29) ein dispersives oder diffraktives Element (31) aufweist, welches im Strahlengang zwischen dem Objektiv (28) und der Flächenkamera (27) angeordnet ist.

5. Inspektionssystem nach einem der vorangehenden Ansprüche,
**dadurch gekennzeichnet,**
**dass** mittels der Verarbeitungsvorrichtung aus einer Mehrzahl von Zeilenbildern ein Analysebild des Produkts ableitbar ist.

6. Inspektionssystem nach einem der vorangehenden Ansprüche,
**dadurch gekennzeichnet,**
**dass** mittels des Objektivs (28) ein Zeilenbild von einer Objektebene (47) der Produktoberfläche (38) auf die Bildebene (49) der Flächenkamera (27) abbildbar ist, wobei die Flächenkamera quer, vorzugsweise orthogonal zu einer Bewegungsrichtung (39) eines Produkts angeordnet ist.

7. Inspektionssystem nach einem der vorangehenden Ansprüche,
**dadurch gekennzeichnet,**
**dass** die Flächenkamera (27) durch einen RGB-Chip oder einen Grauskalenchip ausgebildet ist, der relativ quer, vorzugsweise orthogonal zu einer Bewegungsrichtung (39) eines Produkts 32 bis 128 Sensorzeilen, vorzugsweise 32 bis 64 Sensorzeilen aufweist.

8. Inspektionssystem nach einem der vorangehenden Ansprüche,
**dadurch gekennzeichnet,**
**dass** die Projektionsvorrichtung (32) Licht der Wellenlängenbereiche Rot, Grün, Blau (RGB), Infrarot (IR) und/oder Ultraviolett (UV), vorzugsweise in einem Wellenlängenbereich von 400 bis 700 nm emittieren und die Flächenkamera (27) dieses Licht erfassen kann.

9. Inspektionssystem nach einem der vorangehenden Ansprüche,
**dadurch gekennzeichnet,**
**dass** das Inspektionssystem (26) eine weitere Projektionsvorrichtung (51) aufweist, wobei die Projektionsvorrichtungen symmetrisch relativ zu der Erfassungsebene (46) angeordnet sind.

10. Inspektionssystem nach Anspruch 9,
**dadurch gekennzeichnet,**
**dass** die weitere Projektionsvorrichtung (51) Licht mit einem von der Projektionsvorrichtung (32) abweichenden Wellenlängenbereich oder einem übereinstimmenden Wellenlängenbereich emittiert.

11. Inspektionssystem nach Anspruch 9 oder 10,
**dadurch gekennzeichnet,**
**dass** die weitere Projektionsvorrichtung (51) Licht mit einem von der Projektionsvorrichtung (32) abweichenden Höhe in der Erfassungsebene (46), relativ bezogen auf die Objektebene (47), emittiert.

12. Inspektionssystem nach einem der vorangehenden Ansprüche,
**dadurch gekennzeichnet,**
**dass** das Objektiv (30) ein telezentrisches Objektiv ist.

13. Verfahren zur Fehleranalyse eines Produkts, insbesondere eines Leiterplattenprodukts, Halbleiterwafer oder dergleichen, mit einem Inspektionssystem (26), wobei das Inspektionssystem eine Projektionsvorrichtung (32), eine optische Erfassungsvorrichtung (28) und eine Verarbeitungsvorrichtung umfasst, wobei mittels einer Spektrometereinrichtung der Projektionsvorrichtung Weißlicht in seine spektralen Bestandteile aufgeteilt und ein derart aus monochromatischen Lichtstrahlen gebildeter multichromatischer Lichtstrahl (37) unter einem Einfallswinkel β auf ein Produkt projiziert wird, wobei die optische Erfassungsvorrichtung eine Erfassungseinheit (29) mit einer Flächenkamera (27) und einem Objektiv (28) aufweist, wobei in einer quer, vorzugsweise orthogonal zu einer Produktoberfläche (38) des Produkts verlaufenden Erfassungsebene (46) der Erfassungseinheit ein multichromatischer Lichtstrahl (37) am Produkt reflektiert wird, der mittels der Flächenkamera erfasst wird, wobei der reflektierte multichromatische Lichtstrahl mittels einer bildseitigen Blende (42) der Erfassungseinheit auf eine Bildebene (49) der Flächenkamera projiziert wird, wobei die Blende in der Erfassungsebene in dem Objektiv oder zwischen dem Objektiv und dem Produkt angeordnet ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt und dem Einfallswinkel β eine Höheninformation der Produktoberfläche abgeleitet wird,
**dadurch gekennzeichnet,**
**dass** die Blende zumindest zwei Spalte (52) ausbildet.

14. Verfahren nach Anspruch 13,
**dadurch gekennzeichnet,**
**dass** mittels der Verarbeitungsvorrichtung von zumindest drei, vorzugsweise fünf Sensorzeilen der Flächenkamera (27) mit den höchsten Sättigungswerten gleichzeitig Zeilenbilder erfasst werden.

15. Verfahren nach Anspruch 13 oder 14,
**dadurch gekennzeichnet,**
**dass** mittels einer weiteren Projektionsvorrichtung (51) des Inspektionssystems (26) Licht emittiert wird, wobei mit der Flächenkamera (27) gleichzeitig Zeilenbilder der Projektionsvorrichtung und der weiteren Projektionsvorrichtung erfasst werden.

16. Verfahren nach Anspruch 15,
**dadurch gekennzeichnet,**
**dass** mittels der Verarbeitungsvorrichtung aus einer räumlichen Verteilung von Sättigungswerten des reflektierten multichromatischen Lichtstrahls (37) der weiteren Projektionsvorrichtung (51) in der Bildebene (49), einer Position der optischen Erfassungseinheit (29) relativ zum Produkt und dem Einfallswinkel β eine weitere Höheninformation der Produktoberfläche abgeleitet wird.

17. Verfahren nach einem der Ansprüche 13 bis 16,
**dadurch gekennzeichnet,**
**dass** die Bildebene (49) der Flächenkamera (27) mittels der Verarbeitungseinrichtung hinsichtlich Farbton, Helligkeit und/oder Sättigung analysiert wird.

18. Verfahren nach einem der Ansprüche 13 bis 17,
**dadurch gekennzeichnet,**
**dass** mittels der Verarbeitungseinrichtung aus dem Analysebild ein Material, eine Materialeigenschaft und/oder eine geometrische Struktur des Produkts bestimmt wird und/oder ein Vergleich des Analysebilds mit einem Referenzbild erfolgt.

19. Verfahren nach einem der Ansprüche 13 bis 18,
**dadurch gekennzeichnet,**
**dass** zumindest zwei oder mehr Zeilenbilder einer übereinstimmenden Produktoberfläche (38) mittels Bildverarbeitung der Verarbeitungsvorrichtung kombiniert werden.

## Claims

1. An inspection system (26) for analyzing defects in a product, in particular a printed circuit board product, a semiconductor wafer or the like, the inspection system comprising a projection device (32), an optical detection device (28) and a processing device, the projection device having at least one spectrometer member configured to split white light into its spectral components and project a multichromatic light beam (37) thus formed from monochromatic light beams onto a product at an angle of incidence β, the optical detection device having a detection unit (29) comprising an area scan camera (27) and an objective (28), the area scan camera being configured to detect the multichromatic light beam (37) reflected on the product in a detection plane (46) of the detection unit, the detection plane (46) being perpendicular, preferably orthogonal, to a product surface (38) of the product, the detection unit having an aperture (42) on the image side, the aperture being disposed in the detection plane in the objective or between the objective and the product, the reflected multichromatic light beam being projectable onto an image plane (49) of the area scan camera, the processing device being configured to derive a height information of the product surface from a spatial distribution of saturation values of the reflected multichromatic light beam in the image plane, a position of the optical detection unit relative to the product and the angle of incidence β,
**characterized in that**
the aperture forms at least two slits (52).

2. The inspection system according to claim 1,
**characterized in that**
the processing device is configured to capture line images in at least two positions in the image plane (49) each with at least two sensor lines of the area scan camera (27) that have above-average saturation values.

3. The inspection system according to claim 1 or 2,
**characterized in that**
height information of the product surface is derivable depending on a position of the spatial distribution of saturation values in the image plane (49) of the area scan camera (27).

4. The inspection system according to any one of the preceding claims,
**characterized in that**
the detection unit (29) has a dispersive or diffractive element (31) disposed in the beam path between the objective (28) and the area scan camera (27).

5. The inspection system according to any one of the preceding claims,
**characterized in that**
the processing device is configured to derive an analysis image of the product from a plurality of line images.

6. The inspection system according to any one of the preceding claims,
**characterized in that**
the objective (28) is configured to project a line image from an object plane (47) of the product surface (38) onto the image plane (49) of the area scan camera (27), the area scan camera being disposed perpendicularly, preferably orthogonally, to a direction of movement (39) of a product.

7. The inspection system according to any one of the preceding claims,
**characterized in that**
the area scan camera (27) is formed by a RGB chip or a grayscale chip having 32 to 128 sensor lines, preferably 32 to 64 sensor lines, perpendicular, preferably orthogonal, to a direction of movement (39) of a product.

8. The inspection system according to any one of the preceding claims,
**characterized in that**
the projection device (32) is configured to emit light of the wavelength ranges red, green, blue (RGB), infrared (IR) and/or ultraviolet (UV), preferably in a wavelength range of 400 nm to 700 nm, and the area scan camera (27) is configured to detect said light.

9. The inspection system according to any one of the preceding claims,
**characterized in that**
the inspection system (26) has a further projection device (51), the projection devices being disposed symmetrically relative to the detection plane (46).

10. The inspection system according to claim 9,
**characterized in that**
the further projection device (51) emits light with a different wavelength range than the projection device (32) or a matching wavelength range.

11. The inspection system according to claim 9 or 10,
**characterized in that**
the further projection device (51) emits light with a different height in the detection plane (46) than the projection device (32) relative to the object plane (47).

12. The inspection system according to any one of the preceding claims,
**characterized in that**
the objective (30) is a telecentric objective.

13. A method for analyzing defects in a product, in particular a printed circuit board product, a semiconductor wafer or the like, the method using an inspection system (26), the inspection system comprising a projection device (32), an optical detection device (28) and a processing device, a spectrometer member of the projection device splitting white light into its spectral components and projecting a multichromatic light beam (37) thus formed from monochromatic light beams onto a product at an angle of incidence β, the optical detection device having a detection unit (29) comprising an area scan camera (27) and an objective (28), a multichromatic light beam (37) being reflected on the product in a detection plane (46) of the detection unit, the detection plane being perpendicular, preferably orthogonal, to a product surface (38) of the product, the area scan camera detecting said multichromatic light beam, an aperture (42) of the detection unit on the image side projects the reflected multichromatic light beam onto an image plane (49) of the area scan camera, the aperture being disposed in the detection plane in the objective or between the objective and the product, the processing device deriving a height information of the product surface from a spatial distribution of saturation values of the reflected multichromatic light beam in the image plane, a position of the optical detection unit relative to the product and the angle of incidence β
**characterized in that**
the aperture forms at least two slits (52).

14. The method according to claim 13,
**characterized in that**
the processing device simultaneously detects line images from at least three, preferably five, sensor lines of the area scan camera (27) that have the highest saturation values.

15. The method according to claim 13 or 14,
**characterized in that**
a further projection device (51) of the inspection system (26) emits light, the area scan camera (27) simultaneously capturing line images of the projection device and the further projection device.

16. The method according to claim 15,
**characterized in that**
the processing device derives further height information of the product surface from a spatial distribution of saturation values of the reflected multichromatic light beam (37) of the further projection device (51) in the image plane (49), a position of the optical detection unit (29) relative to the product and the angle of incidence β.

17. The method according to any one of claims 13 to 16,
**characterized in that**
the processing device analyses the image plane (49) of the area scan camera (27) for hue, brightness and/or saturation.

18. The method according to any one of claims 13 to 17,
**characterized in that**
the processing device determines a material, a material property and/or a geometric structure of the product from the analysis image and/or compares the analysis image to a reference image.

19. The method according to any one of claims 13 to 18,
**characterized in that**
the processing device combines at least two or more line images of a matching product surface (38) by image processing.

## Revendications

1. Système d'inspection (26) pour analyser des défauts d'un produit, en particulier un produit de carte de circuit imprimé, une plaquette semi-conductrice ou similaire, le système d'inspection comprenant un appareil de projection (32), un dispositif de détection optique (28) et un dispositif de traitement, l'appareil de projection ayant au moins un moyen de spectromètre configuré pour diviser la lumière blanche en ses composantes spectrales et projeter un rayon de lumière multichromatique (37) ainsi formé à partir de rayons de lumière monochromatiques sur un produit selon un angle d'incidence β, le dispositif de détection optique ayant une unité de détection (29) comprenant une caméra matricielle (27) et un objectif (28), la caméra matricielle étant configurée pour détecter le rayon de lumière multichromatique (37) réfléchi sur le produit dans un plan de détection (46) de l'unité de détection, le plan de détection (46) étant perpendiculaire, de préférence orthogonal, à une surface de produit (38), l'unité de détection ayant un obturateur (42) du côté image, l'obturateur étant disposé dans le plan de détection dans l'objectif ou entre l'objectif et le produit, le rayon de lumière multichromatique réfléchi pouvant être projeté sur un plan d'image (49) de la caméra matricielle, le dispositif de traitement étant configuré pour dériver une information de hauteur de la surface de produit à partir d'une distribution spatiale des valeurs de saturation du rayon de lumière multichromatique réfléchi dans le plan d'image, d'une position de l'unité de détection optique par rapport au produit et de l'angle d'incidence β,
**caractérisé en ce que**
l'obturateur forme au moins deux fentes (52).

2. Système d'inspection selon la revendication 1,
**caractérisé en ce que**
le dispositif de traitement est configuré pour capturer des images de lignes dans deux positions dans le plan d'image (49), chacune avec au moins deux lignes de capteur de la caméra matricielle (27) qui ont des valeurs de saturation supérieures à la moyenne.

3. Système d'inspection selon la revendication 1 ou la revendication 2,
**caractérisé en ce**
**qu'**une information de hauteur de la surface du produit est dérivable en fonction d'une position de la distribution spatiale des valeurs de saturation dans le plan d'image (49) de la caméra matricielle (27).

4. Système d'inspection selon l'une quelconque des revendications,
**caractérisé en ce que**
l'unité de détection (29) a un élément dispersif ou diffractif (31) disposé dans le chemin du faisceau entre l'objectif (28) et la caméra matricielle (27).

5. Système d'inspection selon l'une quelconque des revendications,
**caractérisé en ce que**
le dispositif de traitement est configuré pour dériver une image d'analyse du produit à partir d'une pluralité d'images de lignes.

6. Système d'inspection selon l'une quelconque des revendications,
**caractérisé en ce que**
l'objectif (28) est configuré pour projeter une image de lignes à partir d'un plan d'objet (47) de la surface de produit (38) sur le plan d'image (49) de la caméra matricielle (27), la caméra matricielle étant disposée perpendiculairement, de préférence orthogonalement, à une direction de mouvement (39) d'un produit.

7. Système d'inspection selon l'une quelconque des revendications,
**caractérisé en ce que**
la caméra matricielle (27) est formée par une puce RVB ou une puce de nouveau de gris ayant 32 à 128 lignes de capteur, de préférence 32 à 64 lignes de capteur, perpendiculaire, de préférence orthogonale, à une direction de mouvement (39) d'un produit.

8. Système d'inspection selon l'une quelconque des revendications,
**caractérisé en ce que**
l'appareil de projection (32) est configuré pour émettre une lumière dans le domaine des longueurs d'onde rouge-vert-bleu (RVB), infrarouge (IR) et/ou ultraviolette (UV), de préférence dans un domaine de longueurs d'onde de 400 nm à 700 nm, et la caméra matricielle (27) est configurée pour détecter ladite lumière.

9. Système d'inspection selon l'une quelconque des revendications,
**caractérisé en ce que**
le système d'inspection (26) a un autre appareil de projection (51), les appareils de projection étant disposés symétriquement par rapport au plan de détection (46).

10. Système d'inspection selon la revendication 9,
**caractérisé en ce que**
l'autre appareil de projection (51) émet une lumière avec un domaine de longueurs d'onde différent de celui de l'appareil de projection (32) ou un domaine de longueurs d'onde correspondant.

11. Système d'inspection selon la revendication 9 ou la revendication 10,
**caractérisé en ce que**
l'autre appareil de projection (51) émet une lumière avec une hauteur différente de celle de l'appareil de projection (32) dans le plan de détection (46) par rapport à par rapport au plan de l'objet (47).

12. Système d'inspection selon l'une quelconque des revendications,
**caractérisé en ce que**
l'objectif (30) est un objectif télécentrique.

13. Procédé d'analyse des défauts d'un produit, en particulier un produit de carte de circuit imprimé, une plaquette semi-conductrice ou similaire, le procédé utilisant un système d'inspection (26), le système d'inspection comprenant un appareil de projection (32), un dispositif de détection optique (28) et un dispositif de traitement, un moyen de spectromètre de l'appareil de projection divisant la lumière blanche en ses composantes spectrales et projetant un rayon de lumière multichromatique (37) ainsi formé à partir de rayons de lumières monochromatiques sur un produit selon un angle d'incidence β, le dispositif de détection optique ayant une unité de détection (29) comprenant une caméra matricielle (27) et un objectif (28), un rayon de lumière multichromatique (37) étant réfléchi sur le produit dans un plan de détection (46) de l'unité de détection, le plan de détection étant perpendiculaire, de préférence orthogonal, à une surface de produit (38), la caméra matricielle détectant ledit rayon de lumière multichromatique, un obturateur (42) de l'unité de détection du côté image projetant le rayon de lumière multichromatique réfléchi sur un plan d'image (49) de la caméra matricielle, l'obturateur étant disposé dans le plan de détection dans l'objectif ou entre l'objectif et le produit, le dispositif de traitement dérivant une information de hauteur de la surface de produit à partir d'une distribution spatiale des valeurs de saturation du rayon de lumière multichromatique réfléchi dans le plan d'image, d'une position de l'unité de détection optique par rapport au produit et de l'angle d'incidence β
**caractérisé en ce que**
l'obturateur forme au moins deux fentes (52).

14. Procédé selon la revendication 13,
**caractérisé en ce que**
le dispositif de traitement détecte simultanément des images de lignes provenant d'au moins trois, de préférence cinq, lignes de capteur de la caméra matricielle (27) qui ont les valeurs de saturation les plus élevées.

15. Procédé selon la revendication 13 ou la revendication 14,
**caractérisé en ce**
**qu'**un autre appareil de projection (51) du système d'inspection (26) émet de la lumière, la caméra matricielle (27) capturant simultanément des images de lignes de l'appareil de projection et de l'autre appareil de projection.

16. Procédé selon la revendication 15,
**caractérisé en ce que**
le dispositif de traitement dérive d'autres informations de hauteur de la surface de produit à partir d'une distribution spatiale des valeurs de saturation du rayon de lumière multichromatique réfléchi (37) de l'autre appareil de projection (51) dans le plan d'image (49), d'une position de l'unité de détection optique (29) par rapport au produit et de l'angle d'incidence β.

17. Procédé selon l'une quelconque des revendications 13 à 16,
**caractérisé en ce que**
le dispositif de traitement analyse le plan d'image (49) de la caméra matricielle (27) pour la teinte, la luminosité et/ou la saturation.

18. Procédé selon l'une quelconque des revendications 13 à 17,
**caractérisé en ce que**
le dispositif de traitement détermine un matériau, une propriété de matériau et/ou une structure géométrique du produit à partir de l'image d'analyse et/ou compare l'image d'analyse à une image de référence.

19. Procédé selon l'une quelconque des revendications 13 à 18,
**caractérisé en ce que**
le dispositif de traitement combine au moins deux ou plusieurs images de lignes d'une surface de produit (38) correspondante par traitement d'image.
